# EUROPEAN PATENT SPECIFICATION

(11) **EP 4 298 152 B1**
(45) Date of publication and mention of the grant of the patent: **06.11.2024**
(21) Application number: 21729206.9
(22) Date of filing: 07.05.2021
(51) Int. Cl.: C08G 77/14, C04B 28/00, C08L 83/06

(54) **ORGANOPOLYSILOXANES, COMPOSITIONS AND POWDER FORMULATIONS CONTAINING THE SAME AND USES THEREOF AS A DEFOAMER**
ORGANOPOLYSILOXANE, ZUSAMMENSETZUNGEN UND PULVERFORMULIERUNGEN DAMIT UND VERWENDUNGEN DAVON ALS ENTSCHÄUMER
ORGANOPOLYSILOXANES, COMPOSITIONS ET FORMULATIONS DE POUDRE LES CONTENANT ET LEURS UTILISATIONS EN TANT QU'AGENT ANTIMOUSSE

(43) Date of publication of application: 03.01.2024
(73) Proprietor: Wacker Chemie AG, 81671 München (DE)
(72) Inventor: LI, Zheng, Shanghai 200233 (CN); GU, Jialei, Shanghai 200233 (CN); LEI, Fanghua, Shanghai 200233 (CN); GAO, Wei, Shanghai 200233 (CN)
(74) Representative: Renner, Thomas
(86) International application number: PCT/CN2021/092062
(87) International publication number: WO 2022/233017

(56) References cited:
- EP-A2- 1 424 117
- WO-A1-2019/113406
- CN-A- 106 746 889
- JP-A- S51 137 799
- US-A- 3 746 653
- US-A- 3 929 649
- US-B2- 8 536 109

## Description

### Field of the Invention

The present disclosure relates to organopolysiloxanes, compositions and powder formulations containing the same and uses thereof as a defoamer.

### Background of the Invention

Cement-based slurries, which comprise solid and liquid components, often tend to foam due to the continuous agitation which is necessary to keep the solid components of the slurries in suspension and due to additives such as cellulose ethers incorporated in the cement-based slurries. If the built foam cannot be dissipated in time, there will be serious impact on the appearance and strength of the hardened cement-based slurries. Therefore, defoamer is an essential ingredient of cement-based slurries.

Defoamers based on polydimethylsiloxane are known, but polydimethylsiloxane is incompatible with most surfactant systems and tends to precipitate, which is highly undesirable. Polyether siloxanes have been reported to be used as a defoamer due to their good compatibility. However, the anti-foaming and/or defoaming effect of polyether siloxane itself is usually not ideal, thereby a combination of polyether siloxane and silica and/or MQ silicone resin, or a combination of polyether siloxane and a large amount of polydimethylsiloxane and/or organic oil are used.

CN101802103A discloses an anti-foaming composition, which can be used as a liquid wetting, washing or cleaning agent, comprising a base oil, i.e. a polyether-modified silicone oil, silica and/or MQ silicone resin, and optionally polypropylene glycol and/or a hydrocarbon oil.

US3984347A discloses an antifoam emulsion, comprising polypropylene glycol as a base oil, a foam control agent composed of a base oil polydimethylsiloxane, silica and MQ silicone resin, and a polyether-modified silicone oil for dispersing the foam control agent in the base oil.

US8536109B discloses a silicone foam control agent for a liquid detergent system, comprising a silicone antifoam composed of a aryl-containing silicone oil, MQ silicone resin and silica, a dispersing agent which is a polyether-containing MQ silicone resin where polyether groups are bonded to silicon atoms via Si-C bonds, and optionally a crosslinked siloxane having polyether groups and an organic oil.

US3746653A discloses a foam control agent useful in jet dyeing of textiles, comprising a linear siloxane glycol copolymer, polydimethylsiloxane, a polyether-containing MQ silicone resin where polyether groups are bonded to silicon atoms via Si-C or Si-O bonds, silica and MQ silicone resin.

These antifoams or foam control agents are mainly liquids, and inconvenient for storage, transportation and use. Moreover, they are not suitable for use in cement-based slurries. In recent years, some efforts on solid defoamers also have been reported. However, the anti-foaming and/or defoaming efficiency of these solid defoamers still needs to be improved.

US6129906A discloses a powder defoamer for denture cleasers, comprising 50% to 99% of a water-soluble carrier and 3% to 35% of a hydrophobic silicone oil dispersed within the carrier, and optionally a silicone surfactant, wherein the hydrophobic silicone oil is selected from alkyl- and alkoxy-dimethicone copolyols.

CN103028275B discloses a solid organic silicone defoamer, comprising a methyl-silicone oil, a dimethyl siloxane hydrolysate, fumed silica, a polyether modified silicone oil, an emulsion adjuvant, a surface modifier and a carrier.

CN106746889A discloses a solid defoamer for gypsum-based potting materials, composed of a defoamer particle and a soluble polymeric film wrapped thereon, wherein the defoamer particle comprises a polyether-modified silicone oil, fumed silica, an emulsifier and a carrier.

### Summary of the Invention

The purpose of the present disclosure is to provide a polyether-containing organopolysiloxane and a defoamer composition and powder defoamer containing the same. Such defoamer composition has more superior anti-foaming and defoaming performances than those comprising a polyether-containing silicone oil. And the defoamer composition, as an active ingredient, can be adsorbed onto a solid carrier, used as a powder defoamer for fast elimination of foam built in the preparation of cement-based materials or coatings.

The term "cement-based materials" should be understood as including cement, dry mixtures containing cement, and flowable mixtures containing cement. Known cement according to the main hydraulic materials includes Portland cement, aluminate cement, sulfoaluminate cement, fluoroaluminate cement and ferroaluminate cement.

The "dry mixtures" generally contain cement and optional supplementary cementitious materials, and further may contain one or more of aggregates, polymers and admixtures. The cement herein is usually ordinary Portland cement. The supplementary cementitious materials herein refer to those materials that set and continue to harden and gain strength by hydration process like cement, including fly ash, silica fume, ground granulated blast-furnace slag (referred to as slag), cinder, pozzolan, but not limited thereto, as well as those non-hydraulic cementitious materials that set in the air like limestone and gypsum. The aggregates broadly refer to a number of different types of both coarse and fine particulate materials, including but not limited to sand, gravel and crushed stone. Fine aggregates generally refer to aggregates with a particle size of less than 4.75 mm. The polymers typically include those polymers (or (co)polymers) based on one or more ethylenically unsaturated monomers, such as acrylic acid copolymers, ethylene-vinyl acetate copolymers. The admixtures include but are not limited to cellulose ethers, water reducer, water-repellent agents, anticoagulants, retarders and superplasticizers. In the context of the disclosure, the dry mixtures include dry mortar as referred to in the literature. Dry mortar is generally a mixture comprising cement, fine aggregates and admixtures, and optionally comprising supplementary cementitious materials and/or polymers.

The "flowable mixtures" can be exemplified by slurry materials obtained from cement and optional supplementary cementitious materials by mixing with water, including paste, mortar, grout and concrete, but not limited thereto. Paste is generally a mixture comprising cement, admixtures and water. Mortar is generally a mixture comprising cement, sand, admixtures and water. Grout is generally a mixture comprising cement, sand, polymers, admixtures and water. Generally concrete is a mixture comprising cement, sand, coarse aggregates, admixtures and water. The aforesaid paste, mortar, grout and concrete may optionally contain supplementary cementitious materials, and generally the addition of admixtures is less than 3wt% and the addition of polymers is greater than 1 wt% and less than 50 wt% based on the total weight of cement and supplementary cementitious materials. In the context of the disclosure, the flowable mixtures can also be understood as cement-based slurries.

The "T resin" herein refers to a silicone resin consisting essentially of trifunctional siloxane units RSiO_{3/2}(T), where R is a monovalent optionally substituted, SiC-bonded organic radical and each oxygen atom is bonded to silicon atom on one end and to silicon atom or a monovalent optionally substituted organic radical on the other. Siloxane units e.g. 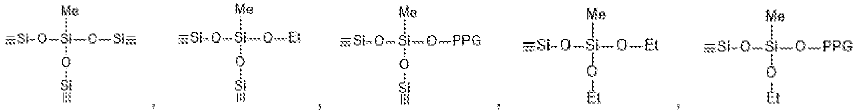 are all trifunctional siloxane units in the context of this invention, wherein Me represents methyl, Et represents ethyl, PPG represents polyoxypropylene ether group. The wording "consisting essentially of trifunctional siloxane units" means that the silicone resin contains at least 50 mol%, for example at least 60 mol%, at least 70 mol%, at least 80 mol%, at least 90 mol% or even 100 mol% of trifunctional siloxane units based on the total number of moles of the siloxane units.

The first aspect of the present disclosure provides an organopolysiloxane, containing at least 50 mol% of trifunctional siloxane units and at least one trifunctional siloxane unit having a polyether group, selected from
(i) polysiloxane containing units of formula (I)

   R¹ₐ(R²O)_{b}R³_{c}SiO_{(4-a-b-c)/2} (I)

   where R¹ is independently at each occurrence a monovalent, optionally substituted, SiC-bonded hydrocarbon radical,
   R² is independently at each occurrence hydrogen or a monovalent, optionally substituted hydrocarbon radical,
   R³ is independently at each occurrence a radical of formula -O-Rₐ-(OR_{b})ⱼ-O-R_{c} wherein Rₐ is a divalent, optionally substituted hydrocarbon radical, R_{b} is independently at each occurrence a divalent, optionally substituted hydrocarbon radical, R_{c} is hydrogen, a monovalent organic radical or has a structure fragment of 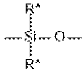 wherein R* is independently at each occurrence R¹, OR² or -O-, j is an integer of from 1 to 200 preferably an integer of from 20 to 200,
   a is 0, 1, 2 or 3,
   b is 0, 1, 2 or 3, and
   c is 0, 1 or 2,
   with the proviso that at least 50 mol% of all of the units of formula (I) a is 1 and the sum b+c is 0, 1 or 2, of which at least 1 unit c is different from 0; or
(ii) polysiloxane containing units of formula (II)

   R^{1'}_{d}R^{3'}ₑSiO_{(4-d-e)/2} (II)

   where R^{1'} is independently at each occurrence a monovalent, optionally substituted, SiC-bonded hydrocarbon radical,
   R^{3'} is independently at each occurrence a radical of formula -Ra^{'}-(OR_{b}^{'})_{j'}-O-R_{c}^{'} wherein Rₐ^{'} is a divalent, optionally substituted hydrocarbon radical, R_{b}^{'} is independently at each occurrence a divalent, optionally substituted hydrocarbon radical, R_{c}^{'} is hydrogen, a monovalent organic radical or has a structure fragment of 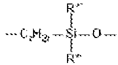 wherein R*' is independently at each occurrence R^{1'} or -O- and r is an integer of from 1 to 6, j^{'} is an integer of from 1 to 200 preferably an integer of from 20 to 200,
   d is 0 or 1, and
   e is 0 or 1,
   with the proviso that at least 50 mol% of all of the units of formula (II) the sum d+e is 1, of which at least 1 unit e is different from 0.

The wording "at least one trifunctional siloxane unit having a polyether group" refers to "at least one polyether-T unit" in the context of the disclosure. And the polyether-T unit is selected from units of R¹ₐ(R²O)_{b}R³_{c}SiO_{(4-a-b-c)/2} of organopolysiloxane (i) where a is 1 and the sum b+c is 0, 1 or 2, of which at least 1 unit c is different from 0, and units of R^{1'}_{d}R^{3'}ₑSiO_{(4-d-e)/2} of organopolysiloxane (ii) where the sum d+e is 1, of which at least 1 unit e is different from 0.

Examples of radicals R¹ are alkyl radicals, such as methyl, ethyl, n-propyl, isopropyl, 1-n-butyl, 2-n-butyl, isobutyl, tert-butyl, n-pentyl, isopentyl, neopentyl, tert-pentyl, n-hexyl, n-heptyl, n-octyl, isooctyl and 2,2,4-trimethylpentyl; cycloalkyl radicals, such as cyclopentyl, cyclohexyl, cycloheptyl and methylcyclohexyl; alkenyl radicals, such as vinyl, 1-propenyl and 2-propenyl; aryl radicals, such as phenyl and naphthyl; alkaryl radicals, such as o-, m-, p-tolyl, xylyl and ethylphenyl; and aralkyl radicals, such as benzyl, α-and β-phenylethyl. Examples of substituted radicals R¹ are hydrocarbon radicals substituted by organosilyl radicals, such as trimethylsilylethylene, and also hydrocarbon radicals substituted by organo-siloxanyl groups.

Preferably, the radical R¹ is an alkyl radical having 1 to 18 carbon atoms or an aromatic radical having 6 to 9 carbon atoms, particularly preferably methyl, n-hexyl, n-heptyl, n-octyl, phenyl and ethylphenyl, in particular methyl.

Examples of radicals R² are hydrogen or the examples given for the radicals R¹, preferably hydrogen and a hydrocarbon radical having 1 to 4 carbon atoms, particularly methyl and ethyl.

Radicals Rₐ are preferably hydrocarbon radicals having 1 to 10 carbon atoms, such as - CH₂-CH₂-, -CH₂-CH(CH₃)-, -CH₂-CH₂-CH₂-, -CH₂-CH(CH₃)CH₂-, -CH₂-CH₂-C₆H₄- and -CH₂-CH(CH₃)-C₆H₄-, particularly -CH₂-CH(CH₃)- and -CH₂-CH₂-CH₂-.

Examples of radicals R_{b} are -CH₂-CH₂-, -CH₂-CH(CH₃)-, -CH₂-CH₂-CH₂-, -CH₂-CH(CH₃)CH₂- and -CH₂-CH(CH₂-CH₃)-, preferably -CH₂-CH₂- and -CH₂-CH(CH₃)-.

Examples of radicals R_{c} are hydrogen or the examples given for the radicals R¹, or radicals of -C(O)-R_{d}wherein R_{d} is an alkyl, preferably hydrogen, methyl, allyl, butyl and acetyl. When the radical R_{c} is any of the aforementioned radicals, one end of the polyether chain is attached to the siloxane via a Si-O bond and the other end is free. Examples of radicals R_{c} can also be those having a structure fragment of 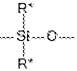 wherein R* is independently at each occurrence R¹ or OR² as defined above or -O-, preferably those having a structure fragment of 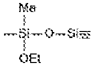 or 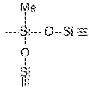 wherein Me represents methyl, Et represents ethyl. In such cases, both ends of the polyether chain are attached to the siloxane(s) via Si-O bonds, forming a crosslinked structure.

In an embodiment herein, radicals R³ are of formula (III)

-O-(CH₂)ₓ-(OC₂H₄)ₘ-(OC₃H₆)ₙ-O-R_{c} (III)

where x is an integer of from 1 to 10, preferably an integer of from 2 to 6, particularly 3,
m is an integer of from 0 to 200, preferably an integer of from 0 to 100, particularly an integer of from 0 to 50,
n is an integer of from 0 to 200, preferably an integer of from 5 to 100, particularly an integer of from 20 to 80,
the sum m+n is an integer of from 1 to 200,
R_{c} is hydrogen, a C₁-C₃₀ alkyl, a C₁-C₃₀ alkenyl or a radical of -C(O)-R_{d} wherein R_{d} is a C₁-C₂₀ alkyl, or has a structure fragment of 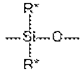 wherein R* is independently at each occurrence a C₁-C₁₈ alkyl, a C₆-C₉ aryl, hydroxyl, a C₁-C₄ alkoxy or -O-, particularly methyl, hydroxyl, methoxy, ethoxy or -O-, R_{c} is preferably hydrogen, methyl, allyl, butyl, acetyl or has a structure fragment of 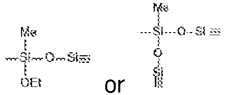 wherein Me represents methyl, Et represents ethyl;
and the units (OC₂H₄) and (OC₃H₆) may be present in random distribution or else as blocks in the radical of formula (III).

In an embodiment herein, the organopolysiloxane (i) is of formula (IV)

(R¹SiO_{3/2})ₓ(R¹(R²O)SiO_{2/2})_{y}(R¹R³SiO_{2/2})_{z}(R¹(R²O)R³SiO_{1/2})ₜ(R¹(R²O)₂SiO_{1/2})_{w} (IV)

where radicals R¹, R², R³ are as defined above, and the sum of z+t is greater than 0; preferably the x units (R¹SiO_{3/2}) are in an amount of from 10 mol% to 95 mol% such as from 10 mol% to 60 mol%, the sum of y units (R¹(R²O)SiO_{2/2}) and z units (R¹R³SiO_{2/2}) are in an amount of from 5 mol% to 90 mol% such as from 20 mol% to 70 mol%, and the sum of t units (R¹(R²O)R³SiO_{1/2}) and w units (R¹(R²O)₂SiO_{1/2}) are in an amount of from 5 mol% to 30 mol%, based on the total number of moles of the siloxane units. The molar contents can be determined by methods well known in the art, for example by ²⁹Si NMR.

Examples of radicals R^{1'}, Rₐ^{'}, R_{b}^{'} are the ones given for the radicals R¹, Rₐ and R_{b} respectively. Examples of radicals R_{c}^{'} are hydrogen, or the examples given for the radicals R^{1'}, or radicals of -C(O)-R_{d}^{'} wherein R_{d}^{'} is an alkyl, preferably hydrogen, methyl, allyl, butyl and acetyl. When the radical R_{c}^{'} is any of the aforementioned radicals, one end of the polyether chain is attached to the siloxane via a Si-C bond and the other end is free. Examples of radicals R_{c}^{'} can also be those having a structure fragment of 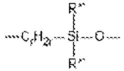 wherein R*' is independently at each occurrence R^{1'} as defined above or -O- and r is an integer of from 1 to 6, preferably those having a structure fragment of 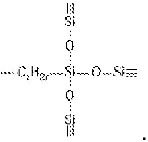 In such cases, both ends of the polyether chain are attached to the siloxane(s) via Si-C bonds, forming a crosslinked structure.

In an embodiment herein, radicals R^{3'} are of formula (V)

-(CH₂)_{x'}-(OC₂H₄)_{m'}-(OC₃H₆)_{n'}-O-R_{c}^{'} (V)

where x' is an integer of from 1 to 10, preferably an integer of from 2 to 6, particularly 3,
m' is an integer of from 0 to 200, preferably an integer of from 0 to 100, particularly an integer of from 0 to 50,
n' is an integer of from 0 to 200, preferably an integer of from 5 to 100, particularly an integer of from 20 to 80,
the sum m'+n' is an integer of from 1 to 200,
R_{c}^{'} is hydrogen, a C₁-C₃₀ alkyl, a C₁-C₃₀ alkenyl or a radical of -C(O)-R_{d}^{'} wherein R_{d}^{'} is a C₁-C₂₀ alkyl, or has a structure fragment of 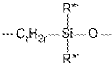 wherein R*' is independently at each occurrence a C₁-C₁₈ alkyl, a C₆-C₉ aryl or -O-, particularly methyl or -O-, and r is an integer of from 1 to 6; R_{c}^{'} is preferably hydrogen, methyl, allyl, butyl, acetyl or has a structure fragment of 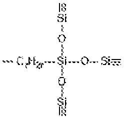 wherein r is an integer of from 1 to 6;
and the units (OC₂H₄) and (OC₃H₆) may be present in random distribution or else as blocks in the radical of formula (V).

The organopolysiloxane of the present disclosure has a R³ or R^{3'} content of from 5 wt% to 95 wt%, for example from 10 wt% to 50 wt%, based on the total weight of the organopolysiloxane. The weight contents can be determined by methods well known in the art, for example by ¹H NMR.

It should be understood that the organopolysiloxane of the present disclosure may also contain other siloxane units in addition to the trifunctional siloxane units defined by the foregoing conditions, such as monofunctional siloxane units R¹₃SiO_{1/2}(M), difunctional siloxane units R¹₂SiO_{2/2}(D) and tetrafunctional siloxane units SiO_{4/2}(Q), wherein radicals R¹ are as defined above. The molar ratio of the other siloxane units may be less than 50 mol%, for example, less than 40 mol%, less than 30 mol%, less than 20 mol%, less than 10 mol%, or even less than 5 mol%, based on the total number of moles of siloxane units.

The organopolysiloxane (i) of the present disclosure is derived from reaction of a mixture comprising a polysiloxane containing units of formula (VI)

R¹_{f}(R²O)_{g}SiO_{(4-f-g)/2} (VI)

where radicals R¹ and R² are as defined above,
f is 0 or 1, and
g is 0, 1, 2 or 3,
with the proviso that at least 50 mol% of all of the units of formula (VI) f is 1, of which at least 1 unit g is different from 0; and
a polyether compound of formula (VII)

   R⁴-(OR⁶)ₖ-O-R⁵ (VII)

   where R⁴ is hydrogen or a monovalent organic radical,
   R⁵ is hydrogen or a C₁-C₃ alkyl,
   R⁶ is independently at each occurrence a divalent, optionally substituted hydrocarbon radical,
   k is an integer of from 1 to 200, preferably from an integer from 10 to 200.

The reaction is typically a condensation reaction, which can be catalyzed by catalysts conventionally used in the art, for example, acidic catalysts such as sulfuric acid, trifluoromethanesulfonic acid, fluorine-containing carboxylic acid, solid acids (such as acid activated clay, macroporous cation exchange resin), phosphorus dichloronitride (phosphonitrile chloride) and oligomers thereof, basic catalysts such as potassium hydroxide, preferably solid acid catalysts.

The reaction is carried out suitably at a temperature of from 80°C to 120°C for a period of suitably from 0.5 h to 4 h. The reaction is advantageously carried out at a reduced pressure to extract small molecular alcohols generated therefrom so as to promote the condensation.

Radicals -OR² in the polysiloxane (VI) are reacted with radicals -OR⁴ and/or -OR⁵ in the polyether (VII) through condensation, consequently, polyether chains are connected to siloxanes via Si-O bonds.

In an embodiment herein, the polysiloxane (VI) is of formula (VIII)

(R¹SiO_{3/2})ₒ(R¹(R²O)SiO_{2/2})ₚ(R¹(R²O)₂SiO_{1/2})_{q} (VIII)

where radicals R¹ and R² are as defined above,
o is a number greater than or equal to 0,
p is a number greater than 0,
q is a number greater than or equal to 0.

Preferably, the o units (R¹SiO_{3/2}) are in an amount of from 0 mol% to 80 mol% such as from 5 mol% to 50 mol%, the p units (R¹(R²O)SiO_{2/2}) are in an amount of from 5 mol% to 90 mol%, the q units (R¹(R²O)₂SiO_{1/2}) are in an amount of from 0 mol% to 50 mol%, based on the total number of moles of the siloxane units. The polysiloxane (VIII) is available under the trade name Trasil from Wacker Chemie AG.

The polysiloxane (VI) or (VIII) may further contain less than 50 mol%, for example, less than 40 mol%, less than 30 mol%, less than 20 mol%, less than 10 mol%, or less than 5 mol% of other siloxane units based on the total number of moles of siloxane units, such as units R¹₃SiO_{1/2}(M), siloxane units R¹₂SiO_{2/2}(D) and units SiO_{4/2}(Q), wherein radicals R¹ are as defined above.

The polyether (VII) is preferably a compound of the following formula

R⁴-(OC₂H₄)ₛ-(OC₃H₆)ₜ-O-R⁵

where R⁴ is hydrogen, a C₁-C₃₀ alkyl, a C₁-C₃₀ alkenyl or a radical of -C(O)-R_{d} wherein R_{d} is a C₁-C₂₀ alkyl, preferably hydrogen, methyl, allyl or butyl,
R⁵ is hydrogen or a C₁-C₃ alkyl, preferably hydrogen or methyl,
s is an integer of from 0 to 200, preferably an integer of from 0 to 100, particularly an integer of from 0 to 50,
t is an integer of from 0 to 200, preferably an integer of from 5 to 100, particularly an integer of from 20 to 80,
the sum s+t is an integer of from 10 to 200,
and the units (OC₂H₄) and (OC₃H₆) may be present in random distribution or else as blocks in the polymer of formula (VII).

The organopolysiloxane (ii) of the present disclosure is derived from reaction of a mixture comprising a polysiloxane containing units of formula (IX)

R¹ₕHᵢSiO_{(4-h-i)/2} (IX)

where radicals R¹ are as defined above,
h is 0 or 1, and
i is 0 or 1,
with the proviso that at least 50 mol% of all of the units of formula (IX) the sum h+i is 1, of which at least 1 unit i is different from 0; and
a polyether compound of formula (VII')

   R^{4'}-(OR^{6'})_{k'}-O-R^{5'} (VII')
where R^{4'} is a C₁-C₃₀ alkenyl, a C₁-C₃₀ alkyl or hydrogen, preferably allyl, methyl or butyl, R^{5'} is a C₁-C₃₀ alkenyl, preferably allyl,
R^{6'} is independently at each occurrence a divalent, optionally substituted hydrocarbon radical,
k' is an integer of from 1 to 200, preferably from an integer from 10 to 200.

The conditions of the reaction can refer to those of conventional hydrosilylation reactions in the art. Hydrogen atoms in the polysiloxane (IX) are reacted with alkenyl radicals in the polyether (VII') through addition, consequently, polyether chains are connected to siloxanes via Si-C bonds.

The second aspect of the present disclosure provides a composition comprising:
(a) at least one organopolysiloxane (i) and/or (ii) of the first aspect of the present disclosure, and
(b) at least one additive selected from
(b1) filler particles and/or
(b2) organopolysiloxane resins comprising units of formula (X)

   R⁷ᵤ(R⁸O)ᵥSiO_{(4-u-v)/2} (X)
where R⁷ is independently at each occurrence hydrogen or a monovalent, optionally substituted, SiC-bonded hydrocarbon radical,
R⁸ is independently at each occurrence hydrogen or a monovalent, optionally substituted hydrocarbon radical,
u is 0, 1, 2 or 3 and
v is 0, 1, 2 or 3,
with the proviso that the sum u+v≤3 and in less than 50 mol% of all of the units of formula (X) in the organopolysiloxane resin the sum u+v is 2.

Component (b1) is preferably pulverulent, more preferably pulverulent and hydrophobic. Examples of component (b1) are silicon dioxide (silicas), titanium dioxide, aluminum oxide, metal soaps, quartz flour, PTFE powder, finely divided hydrophobic polyurethanes, but not limited thereto.

Component (b1) preferably has a BET surface area of from 20 to 1000 m²/g, particularly from 50 to 400 m²/g.

Component (b1) preferably has a particle size of less than 10 µm, particularly of from 10 nm to 5 µm.

As component (b1), particular preference is given to silicas, in particular those with a BET surface area of from 50 to 800 m²/g. These silicas may be fumed or precipitated silicas. Hydrophobic silicas are advantageous for the desired effectiveness of the composition as a defoamer. Methods for the hydrophobicization of silicas are well known.

Component (b2) is preferably an organopolysiloxane resin where from 0 to 30 mol%, more preferably from 0 to 5 mol% of all the units the sum u+v is 2.

Examples of radicals R⁷ are the ones given for the radicals R¹, preferably alkyl radicals having 1 to 4 carbon atoms or phenyl, particularly methyl.

Examples of radicals R⁸ are the ones given for the radicals R², preferably alkyl radicals having 1 to 4 carbon atoms, particularly methyl or ethyl.

Component (b2) is particularly preferably an organopolysiloxane resin which consists essentially of R⁷₃SiO_{1/2} (M) and SiO_{4/2} (Q) units where R⁷ has the aforementioned meaning; these resins are also referred to as MQ resins. The molar ratio of M to Q units is preferably in the range from 0.5 to 2.0, particularly in the range from 0.6 to 1.0. Moreover, these silicone resins can contain up to 10% by weight of free hydroxy or alkoxy radicals. R⁷ is here preferably methyl.

The mass ratio of component (a) to component (b) is preferably (5-30) : 1, for example (10-30) : 1.

The composition of the present disclosure preferably further comprises
(c) a polyether compound of formula (XI)

   R⁹-(OR¹⁰)ₖ-O-R⁹ (XI)
where R⁹ is independently at each occurrence hydrogen or a monovalent organic radical,
R¹⁰ is independently at each occurrence a divalent, optionally substituted hydrocarbon radical,
k is an integer of from 1 to 200.

The polyether (XI) is preferably a compound of formula (XII)

R⁹-(OC₂H₄)ₛ-(OC₃H₆)ₜ-O-R⁹

where R⁹ is independently at each occurrence hydrogen, a C₁-C₃₀ alkyl, a C₁-C₃₀ alkenyl or a radical of -C(O)-R_{d} wherein R_{d} is a C₁-C₂₀ alkyl, preferably hydrogen, methyl, allyl or butyl, particularly hydrogen,
s is an integer of from 0 to 200, preferably an integer of from 0 to 100, particularly an integer of from 0 to 50,
t is an integer of from 0 to 200, preferably an integer of from 5 to 100, particularly an integer of from 20 to 80,
the sum s+t is an integer of from 10 to 200,
and the units (OC₂H₄) and (OC₃H₆) may be present in random distribution or else as blocks in the polymer of formula (XII).

Preference is given to the polyether of formula (XII) where s is 0 and t is an integer of from 20 to 200.

The polyether preferably has a number-average molecular weight (Mn) of 1200 to 12000. More preferably, the polyether is polypropylene glycol with a number-average molecular weight (Mn) of 1200 to 8000.

The mass ratio of component (a) to component (c) is preferably 1 : (0.1-100), preferably 1 : (5-30), for example 1 : (8-25).

The composition of the present disclosure may further comprise (d) at least one hydrocarbon oil, for example, mineral oils, native oils, isoparaffins, polyisobutylenes, fatty acid esters, fatty alcohols. Component (d) may also be commercially available hydrotreated light distillates (petroleum). Component (d) is used in an amount of preferably from 0 to 50 parts by weight, particularly from 0 to 30 parts by weight, based on 100 parts by weight of the defoamer composition. Considering a possible oil precipitation may occur when applying the composition containing component (D) to cement-based materials or coatings, the composition of the present disclosure preferably contains no component (D).

In principle, the composition of the present disclosure may also contain other organosilicon compounds different from those of formula (I), (II), (IV), (VI), (VIII), (IX) or (X), such as methyl polysiloxane, particularly polydimethylsiloxane. However, considering that polydimethylsiloxane is incompatible with most surfactant systems, the composition of the present disclosure preferably contains no polydimethylsiloxane.

Herein, the wording "contain no XX" means the content of the certain ingredient is less than 1 wt%, for example, less than 0.5 wt%, or even less than 0.1 wt% of the total weight of the composition.

In an embodiment herein, the composition comprises
(a) 0.1 wt% to 90 wt% of at least one organopolysiloxane (i) and/or (ii) of the first aspect of the present disclosure,
(d) 0.01 wt% to 5 wt% of at least one additive,
(c) 5 wt% to 98 wt% of at least one polyether,
and optionally
(d) 0 wt% to 50 wt% of at least one hydrocarbon oil.

In a preferred embodiment herein, the composition comprises
(a) 0.5 wt% to 20 wt% of at least one organopolysiloxane (i) and/or (ii) of the first aspect of the present disclosure,
(d) 0.01 wt% to 2 wt% of at least one additive,
(c) 50 wt% to 98 wt% of at least one polyether,
and optionally
(d) 0 wt% to 50 wt% of at least one hydrocarbon oil.

The third aspect of the present disclosure provides a powder formulation, comprising the composition of the second aspect of the present disclosure and a solid carrier. The composition, as an active ingredient, is adsorbed onto the solid carrier.

Suitable solid carriers are generally porous materials, including but not limited to treated or untreated silica fume or precipitated silica, amorphous, colloidal or crystalline silica, diatomaceous earth, clay, bentonite, attapulgite, talc, zeolite powder, activated carbon, silicates such as calcium silicate, carbonates such as calcium carbonate, sodium carbonate, sodium bicarbonate, sulfates, phosphates, sugar alcohols or saccharides, such as sorbitol, mannitol or maltodextrin, starch or modified starch or derivatives thereof, polyethylene glycols, gum arabic, gum tragacanth, carrageenans, cellulose derivatives.

In a preferred embodiment herein, silica fume is used as the solid carrier. "Silica fume" is a fine grained material comprising at least 85 wt% of amorphous silicon dioxide obtained as by products in production of ferrosilicon or industrial silicon (referring to standard GB/T27690-2011).

The preparation method of the powder formulation is not particularly limited, as long as the composition of the second aspect of the present disclosure and the solid carrier are mixed well. The composition and the solid carrier are suitably mixed at a mass ratio of less than 1:1, preferably less than 1:2, such as 1:3. In an embodiment herein, the mass ratio of the composition to the solid carrier is 2: (1-15), for example, 2: (3-10).

The fourth aspect of the present disclosure provides use of the composition of the second aspect of the present disclosure or the powder formulation of the third aspect of the present disclosure as a defoamer.

The composition or powder formulation can be used as a defoamer in e.g. cement-based materials such as the aforesaid dry mixtures containing cement and flowable mixtures containing cement, coatings, adhesives, water miscible cooling lubricants, textiles, personal cares, cosmetics and inks.

When the composition or powder formulation is used as a defoamer in cement-based materials or coatings, foams built in the preparation of cement-based materials or coatings will be eliminated quickly. The use method is not particularly limited. The composition may suitably be added during the preparation of flowable mixtures containing cement such as pastes, mortars, grouts and concretes, or coatings. The powder formulation may suitably be added during the preparation of dry mixtures containing cement especially dry mortars, or powder coatings.

The fifth aspect of the present disclosure provides a defoamer, comprising the composition of the second aspect of the present disclosure or the powder formulation of the third aspect of the present disclosure.

### Detailed Description of the Preferred Embodiments

The present invention is further illustrated by the following examples, but is not limited to the scope thereof. Any experimental methods with no conditions specified in the following examples are selected according to the conventional methods and conditions, or product specifications.

### Characterization of molecular structure

The structure of resins was analyzed by ¹H NMR and ²⁹Si NMR using Bruker Avance III HD 400 spectrometer equipped with a 5 mm BBO probe head.

### Characterization of molecular weight and distribution thereof

The molecular weight and its distribution of resins was analyzed by PSS SECcurity gel permeation chromatography using toluene as a solvent and PLgel 5um MiniMIX-C columns from Agilent at an oven temperature of 45°C.

### Evaluation of anti-foaming/defoaming effects

Preparation of foaming liquid: 8 g of sodium allyl sulfonate was dissolved in 192 mL of water and mixed well to give a 200 mL of foaming liquid.

In each case, the defoamer composition was added to 200 mL of foaming liquid as prepared in an amount specified in Table 2 and 4, then was subjected to stirring at 1000 rpm for 1 min by a double-rod stirrer. The initial foam height and the change of foam height with time were recorded by a light sensor, thus a foam height-time curve was collected. The initial foam height reflects the anti-foaming property of the composition. And the lower the initial height, the better the anti-foaming performance. The integrated area bounded by the height-time curve, height-axis and time-axis, i.e. the integrated area of the curve from the initial height to the height of zero (more accurately the minimum value of foam height that the light sensor could detect, generally a value extremely close to zero), is called AKZ (activity value). The AKZ comprehensively reflects the anti-foaming property and defoaming speed of the composition. And the smaller the AKZ value, the better the overall anti-foaming/defoaming performance.

### Determination of air content

It was carried out according to standard JC/T 601-2009 Methods for determining air content in cement mortar.

### Determination of fluidity

It was carried out according to standard GB/T 2419-2005 Test method for fluidity of cement mortar.

Details of the raw materials used in the Examples and Comparative Examples were as follows.

A2: polyether-modified silicone oil, with a formula of PO30-((CH₃)₂SiO_{2/2})₁₅-PO30 determined by ²⁹Si NMR where PO30 represents a polyether group having 30 propoxy radicals, and a polyether content of 76 wt% determined by ¹H NMR.

A3: alkoxy-T resin, consisting essentially of CH₃SiO_{3/2}, C₂H₅O(CH₃)SiO_{2/2} and (C₂H₅O)₂(CH₃)SiO_{1/2} units, having 30.5 mol% of CH₃SiO_{3/2} units, 46.3 mol% of C₂H₅O(CH₃)SiO_{2/2} units and 20.3 mol% of (C₂H₅O)₂(CH₃)SiO_{1/2} units determined by ²⁹Si NMR.

B1: fumed silica, trade name HDK^{®} H2000, provided by Wacker Chemie AG.

B2: fumed silica, trade name HDK^{®} H15, provided by Wacker Chemie AG.

C1: hydroxy-terminated polypropylene glycol, trade name PPG 2000, commercially available.

C2: hydroxy-terminated polypropylene glycol, trade name PPG 1000, commercially available.

C3: hydroxy-terminated polypropylene glycol, trade name PPG 350, commercially available.

D1: hydrotreated light distillates (petroleum), commercially available.

F1: silica fume: implementation standard GB/T27690-2011, commercially available.

F2: precipitated silica, trade name Evonik sipernat^{®} 22, provided by Evonik.

Cement (42.5 grade): benchmark cement for concrete admixture inspection, implementation standard GB8076-2008, commercially available.

Sand: ISO standard sand, implementation standard GB/T1761-1999, commercially available.

Redispersible polymer powder: trade name VINNAPAS^{®} 5010 N, provided by Wacker Chemie AG.

Cellulose ether: trade name Tylose^{®} MH 10007 P4, provided by Shin-Etsu.

Water reducer: trade name MELMENT^{®} F10, provided by BASF.

### Synthesis Example 1 Polyether-T resin

Alkoxy-T resin A3 and polypropylene glycol C1 were mixed with an effective amount of acid activated clay catalyst and a very small amount of water. The mass ratio of alkoxy-T resin A3 to polypropylene glycol C1 was controlled at (1-3):1 and that for alkoxy-T resin A3 to water was controlled at (4×10³-6×10³):1. The resulting mixture was heated up to 80-100°C and stirred at 80-100°C for 50-80 min for condensation. Then vacuum (100-300 mbar) was applied to distill off distillate (mainly ethanol) at 80-100°C. After the vacuum step, the mixture continued to be stirred for 20-40 min at 80-100°C. Afterwards an appropriate amount of sodium carbonate and water were added and mixed well under stirring at 80-100°C for 50-80 min. Vacuum (100-200 mbar) was continued until the distillate flux decreased. Then the resulting mixture was cooled down, followed by filtering off solids.

The resulting reaction product was determined to have a polyether content of 31.63 mol% (equal to 33.00 wt% calculated by weight) by ¹H NMR. Compared with the ¹H NMR result of the raw material polypropylene glycol C1, it was found that about 74.56 mol% of hydroxyl from polypropylene glycol C1 reacted with alkoxy-T resin A3, indicating that most of the charged polypropylene glycol C1 took part in the condensation reaction and was bonded to alkoxy-T resin A3 via Si-O bonds, and part of the polypropylene glycol C1 was condensed through hydroxyl radicals at one end only, and part was condensed through hydroxyl radicals at both ends. Hereinafter, polyether-T resin A1 was used to refer to this reaction product.

The polyether-T resin A1 was determined to have a formula of (CH₃SiO_{3/2})ₓ (C₂H₅O(CH₃)SiO_{2/2})_{y}(PO30(CH₃)SiO_{2/2})_{z}((C₂H₅O)(PO30)(CH₃)SiO_{1/2})ₜ((C₂H₅O)₂(CH₃)SiO_{1/2})_{w} by ²⁹Si NMR, where x was 36.3 mol%, the sum y+z was 49.5 mol%, the sum t+w was 14.2 mol%, and PO30 represented a polyether group having 30 propoxy radicals.

As measured by PSS SECcurity gel permeation chromatography, the raw material alkoxy-T resin A3 had a weight-average molecular weight (Mw) of 3,548 g/mol (using polystyrene standards) and a polydispersity index Mw/Mn of 3.65; the reaction product polyether-T resin A1 had a weight-average molecular weight (Mw) of 13,020 g/mol (using polystyrene standards) and a polydispersity index Mw/Mn of 8.15.

### Examples 1-4 and Comparative Examples 1-3 Defoamer composition

The ingredients in each example listed in Table 1 were mixed well to give a defoamer composition.

**Table 1**

| Parts by Weight | Example 1 | Example 2 | Example 3 | Example 4 | Comparative Example 1 | Comparative Example 2 | Comparative Example 3 |
|---|---|---|---|---|---|---|---|
| A1 | 5.74 | 5.74 | 5.74 | 5.74 | / | / | / |
| A2 | / | / | / | / | 5.74 | / | / |
| A3 | / | / | / | / | / | 5.74 | / |
| B1 | 0.18 | 0.18 | 0.18 | 0.18 | 0.20 | 0.16 | / |
| B2 | 0.18 | 0.18 | 0.18 | 0.18 | 0.20 | 0.16 | / |
| C1 | 93.90 | / | / | 69.30 | 93.87 | 93.90 | 100 |
| C2 | / | 93.90 | / | / | / | / | / |
| C3 | / | / | 93.90 | / | / | / | / |
| D1 | / | / | / | 24.6 | / | / | / |

Table 2 displayed the evaluation results of each defoamer composition in Examples 1-4 and Comparative Examples 1-3. The defoamer compositions of Examples 1-4 had a AKZ value less than 400, showing a good overall anti-foaming/defoaming performance. By comparing Example 1 and Comparative Example 1, it was found the overall anti-foaming/defoaming performance of defoamer composition containing the polyether-T resin was significantly better than that of defoamer composition containing a polyether modified silicone oil. And by comparing Example 1 and Comparative Example 2, it was seen the polyether-T resin compounding with polypropylene glycol and fumed silica had an obviously better anti-foaming/defoaming performance than the physical mixture of alkoxy-T resin and polypropylene glycol.

**Table 2**

| | Example 1 | Example 2 | Example 3 | Example 4 | Comparative Example 1 | Comparative Example 2 | Comparative Example 3 |
|---|---|---|---|---|---|---|---|
| amount of defoamer composition / µl | 200 | 200 | 200 | 200 | 200 | 200 | 200 |
| AKZ | 10 | 205 | 362 | 155 | 912 | 577 | 9999* |
| Initial height / mm | 15 | 35 | 76 | 55 | 76 | 76 | 90 |

| | | | | | | | |
|---|---|---|---|---|---|---|---|
| *: 9999 means the measured AKZ was so big that it exceeded the range of the light sensor. | | | | | | | |

### Example 5 and Comparative Examples 4-5 Defoamer composition

The ingredients in each example listed in Table 3 were mixed well to give a defoamer composition.

**Table 3**

| Parts by Weight | Example 5 | Comparative Example 4 | Comparative Example 5 |
|---|---|---|---|
| A1 | 94.15 | / | / |
| A2 | / | 77.50 | / |
| A3 | / | / | 94.70 |
| B1 | 2.93 | 2.66 | 2.61 |
| B2 | 2.93 | 2.66 | 2.61 |
| C1 | / | 17.20 | / |

Table 4 displayed the evaluation results of each defoamer composition in Example 5 and Comparative Examples 4-5. It was seen form Table 4 that the polyether-T resin compounding with fumed silica had an obviously better anti-foaming/defoaming performance than the polyether modified silicone oil compounding with fumed silica and polypropylene glycol, and than the alkoxy-T resin compounding with fumed silica.

**Table 4**

| | Example 5 | Comparative Example 4 | Comparative Example 5 |
|---|---|---|---|
| Amount of defoamer composition / µl | 12 | 15 | 12 |
| AKZ | 255 | 1515 | 937 |
| Initial height / mm | 84 | 83 | 81 |

### Example 6 and Comparative Examples 6-7 Powder defoamer

In each example listed in Table 5, ingredients A-D were mixed well and then blended with ingredient F to give a powder defoamer.

**Table 5**

| Parts by Weight | Example 6 | Comparative Example 6 | Comparative Example 7 |
|---|---|---|---|
| A1 | 1.44 | / | / |
| B1 | 0.04 | / | / |
| B2 | 0.04 | / | / |
| C1 | 23.48 | 46.20 | 66.00 |
| D1 | / | 19.80 | / |
| F1 | 75.00 | / | / |
| F2 | / | 34.00 | 34.00 |

### Application Example Use of powder defoamer in dry mortar

The powder defoamer in each case listed in Table 6 was added to cement and then mixed well with sand, redispersible polymer powder, cellulose ether and water reducer to give dry mortar. Dry mortar containing no powder defoamer was used as blank control.

Afterwards the obtained dry mortar in each case was blended with 200 parts by weight of water, and was set and hardened to give a hardened mortar disk. During the blending and hardening process, no oil precipitation was observed for the powder defoamers of Example 6 and Comparative Example 7, while oil precipitation occurred for that of Comparative Example 6.

**Table 6**

| Parts by Weight | Application Example 1 | Comparative Application Example 1 | Comparative Application Example 2 | Blank Control |
|---|---|---|---|---|
| Cement | 1080 | 1080 | 1080 | 1080 |
| Sand | 1255.2 | 1255.2 | 1255.2 | 1255.2 |
| Redispersible polymer powder | 48 | 48 | 48 | 48 |
| Cellulose ether | 2.4 | 2.4 | 2.4 | 2.4 |
| Water reducer | 4.8 | 4.8 | 4.8 | 4.8 |
| Powder defoamer of Example 6 | 4.8 | / | / | / |
| Powder defoamer of Comparative Example 6 | / | 4.8 | / | / |
| Powder defoamer of Comparative Example 7 | / | / | 4.8 | / |

Table 7 summarized the air content and fluidity of each application example and blank control. The dry mortar containing the powder defoamer of the present invention had an obviously reduced air content and an improved fluidity in comparison with blank control. And the dry mortar containing inventive powder defoamer of the present invention also outperformed that containing non-inventive powder defoamer in air content and fluidity.

**Table 7**

| | Application Example 1 | Comparative Application Example 1 | Comparative Application Example 2 | Blank Control |
|---|---|---|---|---|
| Air content | 3.00% | 4.2% | 3.4% | 18.2% |
| Fluidity | 22.85% | 21.85% | 3.4% | 21.55% |

## Claims

1. An organopolysiloxane, containing at least 50 mol% of trifunctional siloxane units and at least one trifunctional siloxane unit having a polyether group, selected from
(i) polysiloxane containing units of formula (I)
R¹ₐ(R²O)_{b}R³_{c}SiO_{(4-a-b-c)/2} (I)
where R¹ is independently at each occurrence a monovalent, optionally substituted, SiC-bonded hydrocarbon radical,
R² is independently at each occurrence hydrogen or a monovalent, optionally substituted hydrocarbon radical,
R³ is independently at each occurrence a radical of formula -O-Rₐ-(OR_{b})ⱼ-O-R_{c}wherein Rₐ is a divalent, optionally substituted hydrocarbon radical, R_{b} is independently at each occurrence a divalent, optionally substituted hydrocarbon radical, R_{c} is hydrogen, a monovalent organic radical or has a structure fragment of 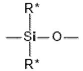 wherein R* is independently at each occurrence R¹, OR² or -O-, j is an integer of from 1 to 200,
a is 0, 1, 2 or 3,
b is 0, 1, 2 or 3, and
c is 0, 1 or 2,
with the proviso that in at least 50 mol% of all of the units of formula (I) a is 1 and the sum b+c is 0, 1 or 2, of which in at least 1 unit c is different from 0; or
(ii) polysiloxane containing units of formula (II)
R^{1'}_{d}R^{3'}ₑSiO_{(4-d-e)/2} (II)
where R^{1'} is independently at each occurrence a monovalent, optionally substituted, SiC-bonded hydrocarbon radical,
R^{3'} is independently at each occurrence a radical of formula -Rₐ^{'}-(OR_{b}^{'})_{j'}-O-R_{c}^{'} wherein Rₐ^{'} is a divalent, optionally substituted hydrocarbon radical, R_{b}^{'} is independently at each occurrence a divalent, optionally substituted hydrocarbon radical, R_{c}^{'} is hydrogen, a monovalent organic radical or has a structure fragment of 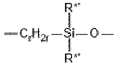 wherein R*' is independently at each occurrence R^{1'} or -O- and r is an integer of from 1 to 6, j^{'} is an integer of from 1 to 200,
d is 0 or 1, and
e is 0 or 1,
with the proviso that in at least 50 mol% of all of the units of formula (II) the sum d+e is 1, of which in at least 1 unit e is different from 0.

2. The organopolysiloxane of claim 1, **characterized in that** the radical R³ is of formula (III)
-O-(CH₂)ₓ-(OC₂H₄)ₘ-(OC₃H₆)ₙ-O-R_{c} (III)
where x is an integer of from 1 to 10,
m is an integer of from 0 to 200,
n is an integer of from 0 to 200,
the sum m+n is an integer of from 1 to 200,
R_{c} is hydrogen, a C₁-C₃₀ alkyl, a C₁-C₃₀ alkenyl, a radical of -C(O)-R_{d} wherein R_{d} is a C₁-C₂₀ alkyl or has a structure fragment of 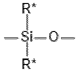 wherein R* is independently at each occurrence a C₁-C₁₈ alkyl, a C₆-C₉ aryl, hydroxyl, a C₁-C₄ alkoxy or -O-, and
the units (OC₂H₄) and (OC₃H₆) may be present in random distribution or else as blocks in the radical of formula (III);
the radical R^{3'} is of formula (V)
-(CH₂)_{x'}-(OC₂H₄)_{m'}-(OH₃H₆)_{n'}-O-R_{c}^{'} (V)
where x' is an integer of from 1 to 10,
m' is an integer of from 0 to 200,
n' is an integer of from 0 to 200,
the sum m'+n' is an integer of from 1 to 200,
R_{c}^{'} is hydrogen, a C₁-C₃₀ alkyl, a C₁-C₃₀ alkenyl or a radical of -C(O)-R_{d}^{'} wherein R_{d}^{'} is a C₁-C₂₀ alkyl, or has a structure fragment of 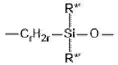 wherein R*' is independently at each occurrence a C₁-C₁₈ alkyl, a C₆-C₉ aryl or -O- and r is an integer of from 1 to 6;
and the units (OC₂H₄) and (OC₃H₆) may be present in random distribution or else as blocks in the radical of formula (V).

3. The organopolysiloxane of claim 2, **characterized by** formula (III) where x is 3, m is 0 and n is an integer of from 5 to 100; or
formula (V) where x' is 3, m' is 0 and n' is an integer of from 5 to 100.

4. The organopolysiloxane of any one of claims 1 to 3, **characterized by** a R³ or R^{3'} content of from 5 wt% to 95 wt% based on the total weight of the organopolysiloxane.

5. The organopolysiloxane of any one of claims 1 to 4, **characterized in that** the organopolysiloxane (i) is of formula (R¹SiO_{3/2})ₓ(R¹(R²O)SiO_{2/2})_{y}(R¹R³SiO_{2/2})_{z}(R¹(R²O)R³SiO_{1/2})ₜ (R¹(R²O)₂SiO_{1/2})_{w} (IV) where the sum of z+t is greater than 0.

6. The organopolysiloxane of claim 5, **characterized in that** the x units (R¹SiO_{3/2}) are in an amount of from 10 mol% to 60 mol%, the sum of y units (R¹(R²O)SiO_{2/2}) and z units (R¹R³SiO_{2/2}) are in an amount of from 20 mol% to 70 mol%, and the sum of t units (R¹(R²O)R³SiO_{1/2}) and w units (R¹(R²O)₂SiO_{1/2}) are in an amount of from 5 mol% to 30 mol%, based on the total number of moles of the siloxane units.

7. The organopolysiloxane of any one of claims 1 to 6, **characterized in that** the organopolysiloxane (i) is derived from reaction of a mixture comprising a polysiloxane containing units of formula (VI)
R¹_{f}(R²O)_{g}SiO_{(4-f-g)/2} (VI)
where R¹ is independently at each occurrence a monovalent, optionally substituted, SiC-bonded hydrocarbon radical,
R² is independently at each occurrence hydrogen or a monovalent, optionally substituted hydrocarbon radical,
f is 0 or 1, and
g is 0, 1, 2 or 3,
with the proviso that in at least 50 mol% of all of the units of formula (VI) f is 1, of which in at least 1 unit g is different from 0; and
a polyether compound of formula (VII)
R⁴-(OR⁶)ₖ-O-R⁵ (VII)
where R⁴ is hydrogen or a monovalent organic radical,
R⁵ is hydrogen or a C₁-C₃ alkyl,
R⁶ is independently at each occurrence a divalent, optionally substituted hydrocarbon radical,
k is an integer of from 1 to 200.

8. A composition comprising:
(a) at least one organopolysiloxane of any one of claims 1 to 7, and
(b) at least one additive selected from
(b1) filler particles and/or
(b2) organopolysiloxane resins comprising units of formula (X)
R⁷ᵤ(R⁸O)ᵥSiO_{(4-u-v)/2} (X)
where R⁷ is independently at each occurrence hydrogen or a monovalent, optionally substituted, SiC-bonded hydrocarbon radical,
R⁸ is independently at each occurrence hydrogen or a monovalent, optionally substituted hydrocarbon radical,
u is 0, 1, 2 or 3 and
v is 0, 1, 2 or 3,
with the proviso that the sum u+v≤3 and in less than 50 mol% of all of the units of formula (X) in the organopolysiloxane resin the sum u+v is 2.

9. The composition of claim 8, further comprising
(c) a polyether compound of formula (XI)
R⁹-(OR¹⁰)ₖ-O-R⁹ (XI)
where R⁹ is independently at each occurrence hydrogen or a monovalent organic radical,
R¹⁰ is independently at each occurrence a divalent, optionally substituted hydrocarbon radical,
k is an integer of from 1 to 200.

10. The composition of claim 9, **characterized in that** component (c) is a compound of formula
R⁹-(OC₂H₄)ₛ-(OC₃H₆)ₜ-O-R⁹ (XII)
where R⁹ is independently at each occurrence hydrogen, a C₁-C₃₀ alkyl, a C₁-C₃₀ alkenyl or a radical of -C(O)-R_{d} wherein R_{d} is a C₁-C₂₀ alkyl,
s is an integer of from 0 to 200,
t is an integer of from 0 to 200,
the sum s+t is an integer of from 10 to 200, and
the units (OC₂H₄) and (OC₃H₆) may be present in random distribution or else as blocks in the polymer of formula (XII).

11. The composition of claim 10, **characterized by** formula (XII) where s is 0 and t is an integer of from 20 to 200.

12. The composition of any one of claims 9 to 11, **characterized by** a mass ratio of component (a) to component (c) of 1 : (0.1-100).

13. The composition of any one of claims 8 to 12, **characterized by** a mass ratio of component (a) to component (b) of (5-30) : 1.

14. The composition of any one of claims 8 to 13, comprising
(a) 0.1 wt% to 90 wt% of at least one organopolysiloxane of any one of claims 1 to 7,
(b) 0.01 wt% to 5 wt% of at least one additive,
(c) 5 wt% to 98 wt% of at least one polyether,
and optionally
(d) 0 wt% to 50 wt% of at least one hydrocarbon oil.

15. A powder formulation, comprising a composition of any one of claims 8 to 14 and a solid carrier.

16. The powder formulation of claim 15, **characterized by** a mass ratio of the composition to the solid carrier of 2 : (1-15).

17. Use of the composition of any one of claims 8 to 14 or the powder formulation of claim 15 or 16 as a defoamer in cement-based materials or coatings.

## Patentansprüche

1. Organopolysiloxan, das wenigstens 50 mol-% an trifunktionellen Siloxaneinheiten und wenigstens eine trifunktionelle Siloxaneinheit mit einer Polyethergruppe enthält, ausgewählt aus
(i) Polysiloxan, das Einheiten der Formel (I) enthält,
R¹ₐ(R²O)_{b}R³_{c}SiO_{(4-a-b-c)/2} (I)
wobei R¹ unabhängig bei jedem Auftreten ein einwertiger, gegebenenfalls substituierter SiCgebundener Kohlenwasserstoffrest ist,
R² unabhängig bei jedem Auftreten Wasserstoff oder ein einwertiger, gegebenenfalls substituierter Kohlenwasserstoffrest ist,
R³ unabhängig bei jedem Auftreten ein Rest der Formel -O-Rₐ-(OR_{b})ⱼ-O-R_{c} ist, wobei Rₐ ein zweiwertiger, gegebenenfalls substituierter Kohlenwasserstoffrest ist, R_{b} unabhängig bei jedem Auftreten ein zweiwertiger, gegebenenfalls substituierter Kohlenwasserstoffrest ist, R_{c} Wasserstoff, ein einwertiger organischer Rest ist oder ein Strukturfragment von 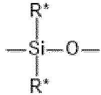 aufweist, wobei R* unabhängig bei jedem Auftreten R¹, OR² oder -O- ist, j eine ganze Zahl von 1 bis 200 ist,
a 0, 1, 2 oder 3 ist,
b 0, 1, 2 oder 3 ist und
c 0, 1 oder 2 ist,
mit der Maßgabe, dass wenigstens in 50 mol-% aller Einheiten der Formel (I) a 1 ist und die Summe b+c 0, 1 oder 2 ist, wovon wenigstens in 1 Einheit c von 0 verschieden ist; oder
(ii) Polysiloxan, das Einheiten der Formel (II) enthält,
R^{1'}_{d}R^{3'}ₑSiO_{4-d-e)/2} (II)
wobei R^{1'} unabhängig bei jedem Auftreten ein einwertiger, gegebenenfalls substituierter SiCgebundener Kohlenwasserstoffrest ist,
R^{3'} unabhängig bei jedem Auftreten ein Rest der Formel -Rₐ'-(OR_{b}')_{j'}-O-R_{c}' ist, wobei Rₐ' ein zweiwertiger, gegebenenfalls substituierter Kohlenwasserstoffrest ist, R_{b}' unabhängig bei jedem Auftreten ein zweiwertiger, gegebenenfalls substituierter Kohlenwasserstoffrest ist, R_{c}' Wasserstoff, ein einwertiger organischer Rest ist oder ein Strukturfragment von 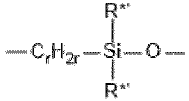 aufweist, wobei R*' unabhängig bei jedem Auftreten R^{1'} oder -O- ist und r eine ganze Zahl von 1 bis 6 ist, j' eine ganze Zahl von 1 bis 200 ist,
d 0 oder 1 ist und
e 0 oder 1 ist,
mit der Maßgabe, dass wenigstens in 50 mol-% aller Einheiten der Formel (II) die Summe d+e 1 ist, wovon wenigstens in 1 Einheit e von 0 verschieden ist.

2. Organopolysiloxan gemäß Anspruch 1, **dadurch gekennzeichnet, dass** der Rest R³ von Formel (III) ist,
-O-(CH₂)ₓ-(OC₂H₄)ₘ-(OC₃H₆)ₙ-O-R_{c} (III)
wobei x eine ganze Zahl von 1 bis 10 ist,
m eine ganze Zahl von 0 bis 200 ist,
n eine ganze Zahl von 0 bis 200 ist,
die Summe m+n eine ganze Zahl von 1 bis 200 ist,
R_{c} Wasserstoff, ein C₁-C₃₀-Alkyl, ein C₁-C₃₀-Alkenyl, ein Rest von -C(O)-R_{d}, wobei R_{d} ein C₁-C₂₀-Alkyl ist oder ein Strukturfragment von 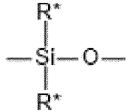 aufweist, wobei R* unabhängig bei jedem Auftreten ein C₁-C₁₈-Alkyl, ein C₆-C₉-Aryl, Hydroxy, ein C₁-C₄-Alkoxy oder -O- ist, und
die Einheiten (OC₂H₄) und (OC₃H₆) in statistischer Verteilung oder andernfalls als Blöcke in dem Rest der Formel (III) vorliegen können;
der Rest R^{3'} von Formel (V) ist,
-(CH₂)_{x'}-(OC₂H₄)_{m'}-(OC₃H₆)_{n'}-O-R_{c}' (V)
wobei x' eine ganze Zahl von 1 bis 10 ist,
m' eine ganze Zahl von 0 bis 200 ist,
n' eine ganze Zahl von 0 bis 200 ist,
die Summe m'+n' eine ganze Zahl von 1 bis 200 ist,
R_{c}' Wasserstoff, ein C₁-C₃₀-Alkyl, ein C₁-C₃₀-Alkenyl oder ein Rest von -C(O)-R_{d}^{'} ist, wobei R_{d}' ein C₁-C₂₀-Alkyl ist oder ein Strukturfragment von 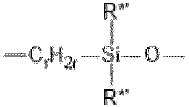 aufweist, wobei R*' unabhängig bei jedem Auftreten ein C₁-C₁₈-Alkyl, ein C₆-C₉-Aryl oder -O- ist und r eine ganze Zahl von 1 bis 6 ist;
und die Einheiten (OC₂H₄) und (OC₃H₆) in statistischer Verteilung oder andernfalls als Blöcke in dem Rest der Formel (V) vorliegen können.

3. Organopolysiloxan gemäß Anspruch 2, **gekennzeichnet durch** Formel (III), wobei x 3 ist, m 0 ist und n eine ganze Zahl von 5 bis 100 ist; oder
Formel (V), wobei x' 3 ist, m' 0 ist und n' eine ganze Zahl von 5 bis 100 ist.

4. Organopolysiloxan gemäß einem der Ansprüche 1 bis 3, **gekennzeichnet durch** einen R³ oder R^{3'}-Gehalt von 5 Gew.-% bis 95 Gew.-%, bezogen auf das Gesamtgewicht des Organopolysiloxans.

5. Organopolysiloxan gemäß einem der Ansprüche 1 bis 4, **dadurch gekennzeichnet, dass** das Organopolysiloxan (i) von der Formel (R¹SiO_{3/2})ₓ (R¹(R²O)SiO_{2/2})_{y} (R¹R³SiO_{2/2})_{z} (R¹(R²O)R³SiO_{1/2})ₜ (R¹(R²O)₂SiO_{1/2})_{w} (IV) ist, wobei die Summe z+t größer als 0 ist.

6. Organopolysiloxan gemäß Anspruch 5, **dadurch gekennzeichnet, dass** die x-Einheiten (R¹SiO_{3/2}) in einer Menge von 10 mol-% bis 60 mol-% vorliegen, die Summe der y-Einheiten (R¹(R²O)SiO_{2/2}) und z-Einheiten (R²R³SiO_{2/2}) in einer Menge von 20 mol-% bis 70 mol-% vorliegt und die Summe der t-Einheiten (R¹(R²O)R³SiO_{1/2}) und w-Einheiten (R¹(R²O)₂SiO_{1/2}) in einer Menge von 5 mol-% bis 30 mol-% vorliegt, bezogen auf die Gesamtmolzahl der Siloxaneinheiten.

7. Organopolysiloxan gemäß einem der Ansprüche 1 bis 6, **dadurch gekennzeichnet, dass** das Organopolysiloxan (i) abgeleitet ist aus einer Reaktion oder einem Gemisch umfassend ein Polysiloxan, das Einheiten der Formel (VI) enthält,
R²_{f}(R²O)_{g}SiO_{(4-f-g)/2} (VI)
wobei R¹ unabhängig bei jedem Auftreten ein einwertiger, gegebenenfalls substituierter SiCgebundener Kohlenwasserstoffrest ist,
R² unabhängig bei jedem Auftreten Wasserstoff oder ein einwertiger, gegebenenfalls substituierter Kohlenwasserstoffrest ist,
f 0 oder 1 ist und
g 0, 1, 2 oder 3 ist,
mit der Maßgabe, dass wenigstens in 50 mol-% aller Einheiten der Formel (VI) f 1 ist, wovon wenigstens in 1 Einheit g von 0 verschieden ist; und
eine Polyetherverbindung der Formel (VII)
R⁴-(OR⁶)ₖ-O-R⁵ (VII)
wobei R⁴ Wasserstoff oder ein einwertiger organischer Rest ist,
R⁵ Wasserstoff oder ein C₁-C₃-Alkyl ist,
R⁶ unabhängig bei jedem Auftreten ein zweiwertiger, gegebenenfalls substituierter Kohlenwasserstoffrest ist,
k eine ganze Zahl von 1 bis 200 ist.

8. Zusammensetzung umfassend:
(a) wenigstens ei Organopolysiloxan gemäß einem der Ansprüche 1 bis 7 und
(b) wenigstens einen Zusatzstoff ausgewählt aus
(b1) Füllstoffpartikeln und/oder
(b2) Organopolysiloxanharzen umfassend Einheiten der Formel (X)
R⁷ᵤ(R⁸O)ᵥSiO_{(4-u-v)/2} (X)
wobei R⁷ unabhängig bei jedem Auftreten Wasserstoff oder ein einwertiger, gegebenenfalls substituierter SiCgebundener Kohlenwasserstoffrest ist,
R⁸ unabhängig bei jedem Auftreten Wasserstoff oder ein einwertiger, gegebenenfalls substituierter Kohlenwasserstoffrest ist,
u 0, 1, 2 oder 3 ist und
v 0, 1, 2 oder 3 ist,
mit der Maßgabe, dass die Summe u+v ≤ 3 und in weniger als 50 mol-% aller Einheiten der Formel (X) in dem Organopolysiloxanharz die Summe u+v 2 ist.

9. Zusammensetzung gemäß Anspruch 8, ferner umfassend (c) eine Polyetherverbindung der Formel (XI)
R⁹-(OR¹⁰)ₖ-O-R⁹ (XI)
wobei R⁹ unabhängig bei jedem Auftreten Wasserstoff oder ein einwertiger organischer Rest ist,
R¹⁰ unabhängig bei jedem Auftreten ein zweiwertiger, gegebenenfalls substituierter Kohlenwasserstoffrest ist,
k eine ganze Zahl von 1 bis 200 ist.

10. Zusammensetzung gemäß Anspruch 9, **dadurch gekennzeichnet, dass** Komponente (c) eine Verbindung der Formel
R⁹-(OC₂H₄)ₛ-(OC₃H₆)ₜ-O-R⁹ (XII)
ist, wobei R⁹ unabhängig bei jedem Auftreten Wasserstoff, ein C₁-C₃₀-Alkyl, ein C₁-C₃₀-Alkenyl oder ein Rest von -C(O)-R_{d} ist, wobei R_{d} ein C₁-C₂₀-Alkyl ist,
s eine ganze Zahl von 0 bis 200 ist,
t eine ganze Zahl von 0 bis 200 ist,
die Summe s+t eine ganze Zahl von 10 bis 200 ist und
die Einheiten (OC₂H₄) und (OC₃H₆) in statistischer Verteilung oder andernfalls als Blöcke in dem Polymer der Formel (XII) vorliegen können.

11. Zusammensetzung gemäß Anspruch 10, **gekennzeichnet durch** Formel (XII), wobei s 0 ist und t eine ganze Zahl von 20 bis 200 ist.

12. Zusammensetzung gemäß einem der Ansprüche 9 bis 11, **gekennzeichnet durch** ein Masseverhältnis von Komponente (a) zu Komponente (c) von 1:(0,1-100).

13. Zusammensetzung gemäß einem der Ansprüche 8 bis 12, **gekennzeichnet durch** ein Masseverhältnis von Komponente (a) zu Komponente (b) von (5-30):1.

14. Zusammensetzung gemäß einem der Ansprüche 8 bis 13, umfassend
(a) 0,1 Gew.-% bis 90 Gew.-% an wenigstens einem Organopolysiloxan gemäß einem der Ansprüche 1 bis 7,
(b) 0,01 Gew.-% bis 5 Gew.-% an wenigstens einem Zusatzstoff,
(c) 5 Gew.-% bis 98 Gew.-% an wenigstens einem Polyether,
und gegebenenfalls
(d) 0 Gew.-% bis 50 Gew.-% an wenigstens einem Kohlenwasserstofföl.

15. Pulverformulierung, umfassend eine Zusammensetzung gemäß einem der Ansprüche 8 bis 14 und einen festen Träger.

16. Pulverformulierung gemäß Anspruch 15, **gekennzeichnet durch** ein Masseverhältnis der Zusammensetzung zu dem festen Träger von 2:(1-15).

17. Verwendung der Zusammensetzung gemäß einem der Ansprüche 8 bis 14 oder der Pulverformulierung gemäß Anspruch 15 oder 16 als Entschäumer in Materialien oder Beschichtungen auf Zementbasis.

## Revendications

1. Organopolysiloxane, contenant au moins 50 % molaires de motifs siloxane trifonctionnels et au moins un motif siloxane trifonctionnel ayant un groupement polyéther, choisi parmi
(i) un polysiloxane contenant des motifs de formule (I)
R¹ₐ(R²O)_{b}R³_{c}SiO_{(4-a-b-c)/2} (I)
où R¹ représente indépendamment dans chaque occurrence un radical hydrocarboné monovalent, éventuellement substitué, lié à SiC,
R² représente indépendamment dans chaque occurrence un hydrogène ou un radical hydrocarboné monovalent, éventuellement substitué,
R³ représente indépendamment dans chaque occurrence un radical de formule -O-Rₐ-(OR_{b})ⱼ-O-R_{c} dans lequel Rₐ représente un radical hydrocarboné divalent, éventuellement substitué, R_{b} représente indépendamment dans chaque occurrence un radical hydrocarboné divalent, éventuellement substitué, R_{c} représente un hydrogène, un radical organique monovalent ou a un fragment de structure de 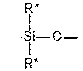 dans lequel R* représente indépendamment dans chaque occurrence R¹, OR² ou -O-, j représente un entier entre 1 et 200,
a représente 0, 1, 2 ou 3,
b représente 0, 1, 2 ou 3, et
c représente 0, 1 ou 2,
à la condition que dans au moins 50 % molaires de tous les motifs de formule (I) a représente 1 et la somme b + c représente 0, 1 ou 2, dont dans au moins 1 motif c est différent de 0 ; ou
(ii) un polysiloxane contenant des motifs de formule (II)
R^{1'}_{d}R^{3'}ₑSiO_{(4-d-e)/2} (II)
où R^{1'} représente indépendamment dans chaque occurrence un radical hydrocarboné monovalent, éventuellement substitué, lié à SiC,
R^{3'} représente indépendamment dans chaque occurrence un radical de formule -Rₐ'-(OR_{b}')_{j'}-O-R_{c}' dans lequel Rₐ' représente un radical hydrocarboné divalent, éventuellement substitué, R_{b}' représente indépendamment dans chaque occurrence un radical hydrocarboné divalent, éventuellement substitué, R_{c}' représente un hydrogène, un radical organique monovalent ou a un fragment de structure de 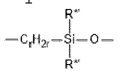 dans lequel R*' représente indépendamment dans chaque occurrence R^{1'} ou -O- et r représente un entier entre 1 et 6, j' représente un entier entre 1 et 200,
d représente 0 ou 1, et
e représente 0 ou 1,
à la condition que dans au moins 50 % molaires de tous les motifs de formule (II) la somme d + e représente 1, dont dans au moins 1 motif e est différent de 0.

2. Organopolysiloxane selon la revendication 1, **caractérisé en ce que** le radical R³ répond à la formule (III)
-O-(CH₂)ₓ-(OC₂H₄)ₘ-(OC₃H₆)ₙ-O-R_{c} (III)
où x représente un entier entre 1 et 10,
m représente un entier entre 0 et 200,
n représente un entier entre 0 et 200,
la somme m + n représente un entier entre 1 et 200,
R_{c} représente un hydrogène, un alkyle en C₁-C₃₀, un alcényle en C₁-C₃₀, un radical -C(O)-R_{d} dans lequel R_{d} représente un alkyle en C₁-C₂₀ ou a un fragment de structure de 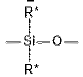 dans lequel R* représente indépendamment dans chaque occurrence un alkyle en C₁-C₁₈, un aryle en C₆-C₉, un hydroxyle, un alkoxy en C₁-C₄ ou -O-, et
les motifs (OC₂H₄) et (OC₃H₆) peuvent être présents dans une distribution aléatoire ou encore de manière séquencée dans le radical de formule (III) ;
le radical R^{3'} répond à la formule (V)
- (CH₂)_{x'}-(OC₂H₄)_{m'}-(OC₃H₆)_{n'}-O-R_{c'} (V)
où x' représente un entier entre 1 et 10,
m' représente un entier entre 0 et 200,
n' représente un entier entre 0 et 200,
la somme m' + n' représente un entier entre 1 et 200,
R_{c}' représente un hydrogène, un alkyle en C₁-C₃₀, un alcényle en C₁-C₃₀ ou un radical -C(O)-R_{d}^{'} dans lequel R_{d}' représente un alkyle en C₁-C₂₀, ou a un fragment de structure de 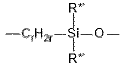 dans lequel R*' représente indépendamment dans chaque occurrence un alkyle en C₁-C₁₈, un aryle en C₆-C₉ ou -O- et r représente un entier entre 1 et 6 ;
et les motifs (OC₂H₄) et (OC₃H₆) peuvent être présents dans une distribution aléatoire ou encore de manière séquencée dans le radical de formule (V).

3. Organopolysiloxane selon la revendication 2, **caractérisé par** la formule (III) où x représente 3, m représente 0 et n représente un entier entre 5 et 100 ; ou
la formule (V) où x' représente 3, m' représente 0 et n' représente un entier entre 5 et 100.

4. Organopolysiloxane selon l'une quelconque des revendications 1 à 3, **caractérisé par** une teneur en R³ ou R^{3'} entre 5 % en masse et 95 % en masse par rapport à la masse totale de l'organopolysiloxane.

5. Organopolysiloxane selon l'une quelconque des revendications 1 à 4, **caractérisé en ce que** l'organopolysiloxane (i) répond à la formule (R¹SiO_{3/2})ₓ (R¹(R²O)SiO_{2/2})_{y} (R¹R³SiO_{2/2})_{z} (R¹(R²O)R³SiO_{1/2})ₜ (R¹(R²O)₂SiO_{1/2})_{w} (IV) où la somme de z + t est supérieure à 0.

6. Organopolysiloxane selon la revendication 5, **caractérisé en ce que** les x motifs (R¹SiO_{3/2}) sont présents à une teneur entre 10 % molaires et 60 % molaires, la somme des y motifs (R¹(R²O)SiO_{2/2}) et des z motifs (R¹R³SiO_{2/2}) représente une teneur entre 20 % molaires et 70 % molaires, et la somme des t motifs (R¹(R²O)R³SiO_{1/2}) et des w motifs (R¹(R²O)₂SiO_{1/2}) représente une teneur entre 5 % molaires et 30 % molaires, par rapport au nombre total de moles des motifs siloxane.

7. Organopolysiloxane selon l'une quelconque des revendications 1 à 6, **caractérisé en ce que** l'organopolysiloxane (i) est dérivé de la réaction d'un mélange comprenant un polysiloxane contenant des motifs de formule (VI)
R²_{f}(R²O)_{g}SiO_{(4-f-g)/2} (VI)
où R¹ représente indépendamment dans chaque occurrence un radical hydrocarboné monovalent, éventuellement substitué, lié à SiC,
R² représente indépendamment dans chaque occurrence un hydrogène ou un radical hydrocarboné monovalent, éventuellement substitué,
f représente 0 ou 1, et
g représente 0, 1, 2 ou 3,
à la condition que dans au moins 50 % molaires de tous les motifs de formule (VI) f représente 1, dont dans au moins 1 motif g est différent de 0 ; et
un composé de polyéther de formule (VII)
R⁴-(OR⁶)ₖ-O-R⁵ (VII)
où R⁴ représente un hydrogène ou un radical organique monovalent,
R⁵ représente un hydrogène ou un alkyle en C₁-C₃,
R⁶ représente indépendamment dans chaque occurrence un radical hydrocarboné divalent, éventuellement substitué,
k représente un entier entre 1 et 200.

8. Composition comprenant :
(a) au moins un organopolysiloxane selon l'une quelconque des revendications 1 à 7, et
(b) au moins un additif choisi parmi
(b1) des particules de charge et/ou
(b2) des résines organopolysiloxane comprenant des motifs de formule (X)
R⁷ᵤ(R⁸O)ᵥSiO_{(4-u-v)/2} (X)
où R⁷ représente indépendamment dans chaque occurrence un hydrogène ou un radical hydrocarboné monovalent, éventuellement substitué, lié à SiC,
R⁸ représente indépendamment dans chaque occurrence un hydrogène ou un radical hydrocarboné monovalent, éventuellement substitué,
u représente 0, 1, 2 ou 3 et
v représente 0, 1, 2 ou 3,
à la condition que la somme u + v ≤ 3 et dans moins de 50 % molaires de tous les motifs de formule (X) dans la résine organopolysiloxane la somme u + v représente 2.

9. Composition selon la revendication 8, comprenant en outre
(c) un composé de polyéther de formule (XI)
R⁹-(OR¹⁰)ₖ-O-R⁹ (XI)
où R⁹ représente indépendamment dans chaque occurrence un hydrogène ou un radical organique monovalent,
R¹⁰ représente indépendamment dans chaque occurrence un radical hydrocarboné divalent, éventuellement substitué,
k représente un entier entre 1 et 200.

10. Composition selon la revendication 9, **caractérisée en ce que** le composant (c) est un composé de formule
R⁹-(OC₂H₄)ₛ-(OC₃H₆)ₜ-O-R⁹ (XII)
où R⁹ représente indépendamment dans chaque occurrence un hydrogène, un alkyle en C₁-C₃₀, un alcényle en C₁-C₃₀ ou un radical -C(O)-R_{d} dans laquelle R_{d} représente un alkyle en C₁-C₂₀,
s représente un entier entre 0 et 200,
t représente un entier entre 0 et 200,
la somme s + t représente un entier entre 10 et 200, et
les motifs (OC₂H₄) et (OC₃H₆) peuvent être présents dans une distribution aléatoire ou encore de manière séquencée dans le polymère de formule (XII).

11. Composition selon la revendication 10, **caractérisée par** la formule (XII) où s représente 0 et t représente un entier entre 20 et 200.

12. Composition selon l'une quelconque des revendications 9 à 11, **caractérisée par** un rapport massique du composant (a) au composant (c) de 1 : (0,1 à 100).

13. Composition selon l'une quelconque des revendications 8 à 12, **caractérisée par** un rapport massique du composant (a) au composant (b) de (5 à 30) : 1.

14. Composition selon l'une quelconque des revendications 8 à 13, comprenant
(a) 0,1 % en masse à 90 % en masse d'au moins un organopolysiloxane selon l'une quelconque des revendications 1 à 7,
(b) 0,01 % en masse à 5 % en masse d'au moins un additif,
(c) 5 % en masse à 98 % en masse d'au moins un polyéther,
et éventuellement
(d) 0 % en masse à 50 % en masse d'au moins une huile hydrocarbonée.

15. Formule de poudre, comprenant une composition selon l'une quelconque des revendications 8 à 14 et un véhicule solide.

16. Formule de poudre selon la revendication 15, **caractérisée par** un rapport massique de la composition au véhicule solide de 2 : (1 à 15).

17. Utilisation de la composition selon l'une quelconque des revendications 8 à 14 ou de la formule de poudre selon la revendication 15 ou 16 en tant qu'agent antimousse dans des matériaux ou revêtements à base de ciment.
